# FASCICULE DE BREVET EUROPEEN

(11) **EP 3 811 432 B1**
(45) Date de publication et mention de la délivrance du brevet: **27.04.2022**
(21) Numéro de dépôt: 19733988.0
(22) Date de dépôt: 17.06.2019
(51) Int. Cl.: H01M 10/6556, H01M 10/6568, H01M 10/613, H01M 50/204

(54) **BOÎTIER COMPRENANT UN ENSEMBLE MODULABLE POUR LA CIRCULATION D'UN FLUIDE CALOPORTEUR DANS UNE BATTERIE POUR VEHICULE AUTOMOBILE**
GEHAUSE MIT EINER MODULAREN ANORDNUNG ZUR ZIRKULATION EINES WÄRMEÜBERTRAGUNGSFLUIDS IN EINER KRAFTFAHRZEUGBATTERIE
HOUSING COMPRISING A MODULAR ASSEMBLY FOR THE CIRCULATION OF A HEAT TRANSFER FLUID IN A MOTOR VEHICLE BATTERY

(30) Priorité: 21.06.2018 FR 1855511
(43) Date de publication de la demande: 28.04.2021
(73) Titulaire: Sogefi Air & Cooling (SAS), 78280 Guyancourt (FR)
(72) Inventeur: FLORANC, Alexandre, 68280 LOGELHEIM (FR); COLIN, Eric, 68770 AMMERSCHWIHR (FR)
(74) Mandataire: Cabinet Nuss
(86) Numéro de dépôt international: PCT/EP2019/065812
(87) Numéro de publication internationale: WO 2019/243222

(56) Documents cités:
- CN-A- 107 579 307
- DE-A1-102014 106 941
- FR-A1- 2 967 246
- US-A1- 2017 047 624

## Description

La présente invention concerne le domaine des sources d'énergie électriques autonomes, en particulier celles embarquées dans des véhicules automobiles, et a pour objet un boîtier pour le logement d'au moins une unité de batterie pour un véhicule automobile hybride ou électrique comprenant un ensemble modulable pour l'admission, la circulation et la sortie d'un fluide de refroidissement dans l'unité de batterie.

Les véhicules hybrides/électriques sont équipés d'une batterie permettant de stocker l'énergie électrique nécessaire à leur fonctionnement. Les enjeux actuels nécessitent d'optimiser la conception des unités de batterie aussi dénommées « packs batteries », afin d'en tirer les meilleures performances en terme de durée de vie (charge/décharge) et d'autonomie de roulage. Le temps de charge est également un facteur important dans l'utilisation quotidienne de ces packs batteries.

Les batteries mises en œuvre ont idéalement besoin de fonctionner à des températures entre 10 °C et 30 °C, en particulier les batteries à haute densité de stockage, du type par exemple Li-ion ou Li-polymère. Une température trop basse impacte l'autonomie et une température trop élevée impacte la durée de vie des batteries. Il est donc nécessaire de réguler au mieux la température des batteries.

Dans le cadre des applications embarquées sur véhicules, il existe des solutions de batteries refroidies par un fluide caloporteur afin d'améliorer les échanges thermiques et d'augmenter l'efficacité de la régulation.

On prévoit des bacs de réception pour ces batteries qui consistent en des boîtiers dans lesquels on dispose les modules de batteries fournis par le fabricant. Il s'agit en général de boîtiers avec un plancher en aluminium extrudé, tel que par exemple décrit dans le brevet US 8 790 808. Ce plancher est traversé de part en part par des canaux rectilignes dans lesquels circule le fluide caloporteur, en particulier de refroidissement. Un boîtier pour le logement d'une unité de batterie et un ensemble pour l'admission, la circulation et la sortie d'un fluide caloporteur sont décrits dans la demande de brevet FR2967246.

Toutefois, ces solutions sont très peu flexibles en termes d'implantation et rendent difficiles la maintenance. Il en résulte une construction complexe, formée par l'assemblage d'un nombre important de pièces, nécessitant la réalisation de nombreux raccordements étanches lors de la fabrication (dont la tenue au vieillissement peut être problématique) et constituant une structure encombrante, multicomposante.

Il existe donc un besoin pour un dispositif ou ensemble modulable d'alimentation, de circulation et de récupération du liquide caloporteur qui soit arrangé aux extrémités des canaux du plancher extrudé précité.

La présente invention a pour but de surmonter au moins les principales limitations précitées et de proposer un tel ensemble modulable.

A cet effet, l'invention a pour objet un boîtier pour le logement d'au moins une unité de batterie selon la revendication 1. En particulier, le boîtier comprend un ensemble modulable pour l'admission, la circulation et la sortie d'un fluide caloporteur, en particulier de refroidissement d'au moins une unité de batterie pour un véhicule automobile hybride ou électrique comportant au moins une telle unité, ledit boîtier présentant un plancher dans lequel sont arrangés des canaux rectilignes et parallèles entre eux recevant ledit fluide, et ledit boîtier comportant :
- un module servant d'entrée et un module identique servant de sortie dudit fluide caloporteur vers, respectivement depuis, le circuit de canaux via à chaque fois un module d'embase, chaque module d'embase comprenant un système de canaux sensiblement rectilignes et parallèles et venant en regard des extrémités des canaux dudit plancher, de sorte que les canaux du module d'embase viennent à chaque fois en appui étanche sur lesdites extrémités, lesdits modules d'embase étant fixés sur ledit plancher,
- une pluralité de modules d'embase répartis le long de chacune des deux faces du plancher et venant en regard des extrémités des canaux dudit plancher, de sorte que les canaux du module d'embase viennent à chaque fois en appui étanche sur lesdites extrémités, lesdits modules d'embase étant fixés sur ledit plancher, et
- une pluralité de ponts reliant fluidiquement deux modules d'embase adjacents situés sur un même côté dudit plancher entre eux et deux modules d'embase situés sur le côté opposé du boîtier entre eux avec un décalage de sorte à former un circuit de fluide caloporteur en forme de U ou de serpentin entre les deux faces opposées dudit boîtier, le cas échéant tout le long de ce dernier,
- chaque module d'embase étant réalisé sous la forme d'une barre longiligne comportant au moins deux, de préférence trois et encore plus préférentiellement quatre canaux venant en prise étanche avec un nombre correspondant de canaux situés dans le plancher dudit boîtier, caractérisé en ce que chaque pont est réalisé sous la forme d'une entretoise longiligne permettant de relier fluidiquement deux modules d'embase adjacents et comportant au moins deux leviers pivotants qui sont munis, à leurs extrémités inférieures, de crochets venant en prise par le bas avec des ergots correspondants disposés sur les modules d'embase à relier et qui sont munis, à leur extrémités opposées, de points de fixation venant en regard avec des points de fixation correspondants situés sur les modules d'embase, lesdits points de fixations étant aptes à recevoir une vis permettant leur solidarisation mutuelle lorsque lesdits leviers pivotants sont abaissés et en prise avec les ergots des modules d'embase à relier.

L'invention a encore pour objet un véhicule automobile, en particulier électrique ou hybride, caractérisé en ce qu'il comprend au moins un boîtier précité également selon l'invention.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
la figure 1 est une vue en perspective d'un boîtier destiné à recevoir une ou plusieurs unités de batterie ;
la figure 2 est une vue schématique simplifiée vue de dessus d'un exemple d'un ensemble modulable selon l'invention (sans canaux apparents) ;
la figure 3 est une vue du module d'entrée ou de sortie de l'ensemble modulable selon l'invention ;
les figures 4a à 4c sont des représentations latérales de deux modules d'embase et d'un pont, tous selon l'invention, dans différentes phases d'assemblages ;
la figure 5 est un agrandissement partiel d'une zone de connexion de la figure 4c ;
la figure 6 est une représentation d'une coupe longitudinale dans un plan médian de l'assemblage selon l'invention illustré à la figure 4c; et
la figure 7 est une vue schématique de dessus de l'assemblage selon l'invention illustré à la figure 4c.

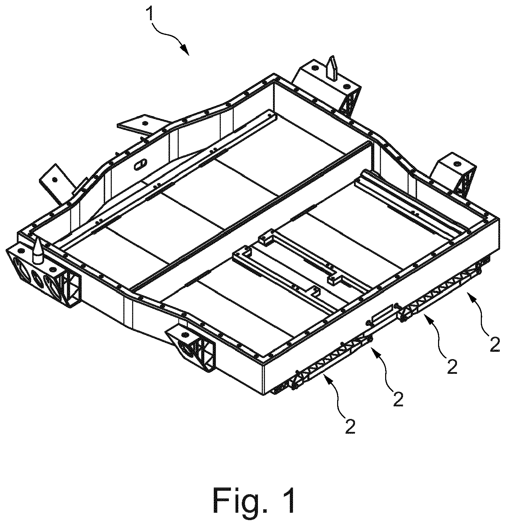

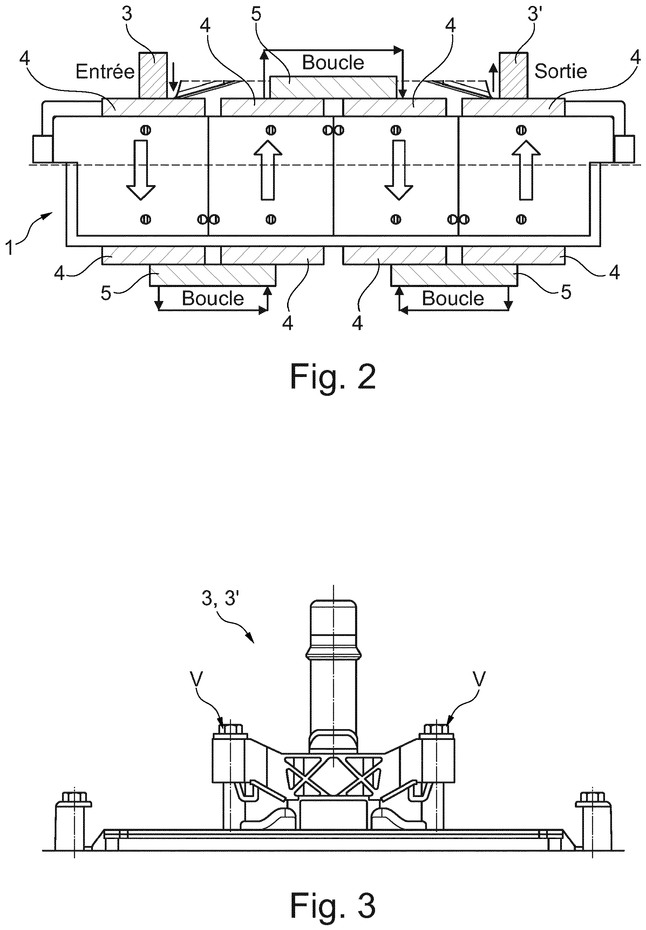

Les figures 1 et 2 montrent un boîtier 1, notamment pour véhicule automobile hybride et/ou électrique, destiné à recevoir une pluralité de cellules ou d'éléments de batterie (non représentés), le cas échéant regroupé(e)s physiquement et/ou électriquement en plusieurs blocs ou modules, ledit boîtier 1 logeant et entourant lesdit(e)s cellules ou éléments et des moyens de régulation de la température desdit(e)s cellules ou éléments par circulation de fluide caloporteur dans des canaux 2 (fig. 1) présents dans le plancher, notamment extrudé, dudit boîtier 1.

Le boîtier 1 comporte donc, au moins au niveau d'une région de son fond sur laquelle reposent les cellules, au moins une, préférentiellement plusieurs, zone(s) d'échange thermique entre lesdites cellules et le fluide caloporteur, ladite ou lesdites zone(s) étant intégrée(s) dans la structure dudit boîtier 1 dans le plancher (par exemple en métal extrudé) de ce dernier.

Ainsi, du fait de l'intégration d'une partie au moins des moyens de régulation en température dans la structure même du boîtier 1, on aboutit à une construction compacte (volume intérieur maximum, volume extérieur minimal), avec un nombre limité de pièces et de parties à assembler.

Afin de permettre de résoudre le problème technique posé et ainsi de pouvoir proposer un plus grand nombre de solutions et comme illustré schématiquement à la figure 2, le boîtier de la présente invention comprend un ensemble modulable pour l'admission, la circulation et la sortie d'un fluide caloporteur, en particulier de refroidissement dans une unité de batterie pour un véhicule automobile hybride ou électrique comportant au moins une telle unité, ladite au moins une unité de batterie étant logée dans un boîtier 1 présentant un plancher, notamment en métal extrudé, dans lequel sont arrangés des canaux 2 rectilignes et parallèles entre eux (non représentés) recevant ledit fluide, caractérisé en ce que le boîtier 1 comporte :
- un module 3 servant d'entrée et un module 3' identique servant de sortie dudit fluide caloporteur vers, respectivement depuis, le circuit de canaux 2 via à chaque fois un module d'embase 4, chaque module d'embase 4 comprenant un système de canaux sensiblement rectilignes et parallèles et venant en regard des extrémités des canaux 2 dudit plancher, de sorte que les canaux du module d'embase 4 viennent à chaque fois en appui étanche sur lesdites extrémités, lesdits modules d'embase 4 étant fixés sur ledit plancher,
- une pluralité de modules d'embase 4 répartis le long de chacune des deux faces du plancher et venant en regard des extrémités des canaux 2 dudit plancher, de sorte que les canaux du module d'embase 4 viennent à chaque fois en appui étanche sur lesdites extrémités, lesdits modules d'embase 4 étant fixés sur ledit plancher, et
- une pluralité de ponts 5 reliant fluidiquement deux modules d'embase 4 adjacents situés sur un même côté dudit plancher entre eux et deux modules d'embase 4 situés sur le côté opposé du boitier 1 entre eux avec un décalage de sorte à former un circuit de fluide caloporteur en forme de U ou de serpentin entre les deux faces opposées dudit boîtier 1, le cas échéant tout le long de ce dernier.

Pour plus de clarté, lesdits canaux 2 n'ont pas été représentés sur la figure 2. Toutefois, on a indiqué par des flèches, le sens de circulation du fluide caloporteur entre les différents éléments, notamment à travers les boucles formés par les ponts 5, de sorte à former, dans l'exemple non limitatif présenté à ladite figure 2, un circuit en forme de serpentin avec trois coudes en forme de U.

Bien entendu, en jouant sur le nombre de chacun des modules 3, 3' des modules d'embase 4 et des ponts 5 on peut réaliser un ou plusieurs circuits plus ou moins longs en forme de serpentins, de U ou de U renversés, etc. ce qui accroît sensiblement le nombre de possibilités et donc la flexibilité d'utilisation en fonction des autres paramètres fournis par les constructeurs, en particulier les fournisseurs d'unités de batteries.

Comme on peut le voir sur la figure 3, les modules 3, 3' servant d'entrée et de sortie (pour le fluide caloporteur) sont réalisés sous la forme de conduits fixés de façon étanche par vissage, de préférence à l'aide de deux vis V pour chaque module 3, 3' avec communication fluidique sur lesdits modules d'embase 4.

Selon un mode de réalisation particulièrement préféré, et comme évoqué à la figure 2 précitée, l'ensemble selon l'invention est caractérisé en ce qu'il comprend exactement un module 3 servant d'entrée et un module 3' identique servant de sortie et en ce que ces modules 3, 3' sont disposés sur le même côté du boîtier 1. Entre ces deux modules 3, 3', on peut prévoir le nombre souhaité de modules d'embase 4 et de ponts 5.

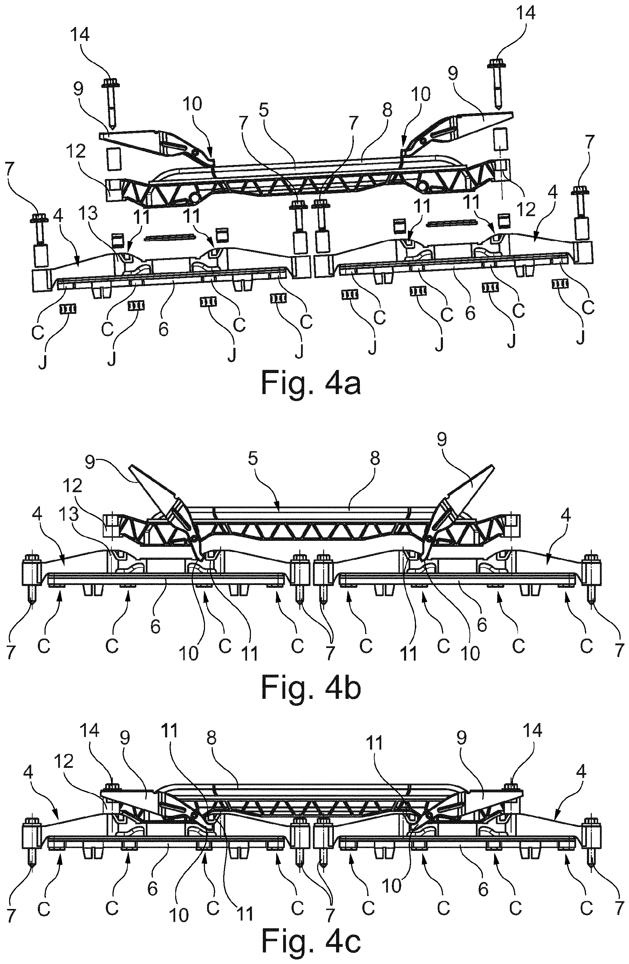

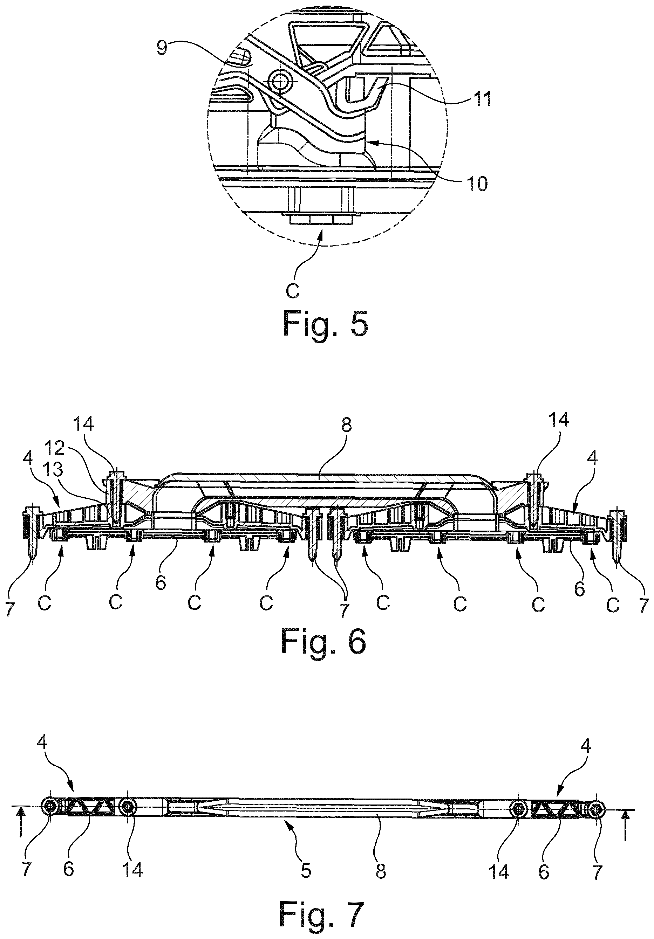

Selon l'invention et comme illustré sur les figures 4a à 4c et 5 à 7, chaque module d'embase 4 est réalisé sous la forme d'une barre longiligne 6 comportant au moins deux, de préférence trois et encore plus préférentiellement quatre canaux venant en prise étanche avec un nombre correspondant de canaux 2 situés dans le plancher dudit boîtier 1.

Dans l'exemple non limitatif représenté aux figures 4a à 4c, 5 et 6, on a désigné par la lettre C les quatre canaux présents sur ledit module d'embase. Sur la figure 4a, on a également représenté les joints J destinés à assurer l'étanchéité au niveau des jonctions entre lesdits canaux C et les canaux 2 dudit plancher. Ces joints J sont évidemment également présents sur les réalisations des autres figures mais sans être expressément désignés pour plus de clarté. A titre d'exemple, le plancher, en particulier le plancher extrudé, peut mesurer 14 mm d'épaisseur et le mur de chaque canal ne peut alors excéder une épaisseur de quelques millimètres, par exemple 2 mm. Chaque joint J vient alors en appui sur un profil très fin. Pour résister aux déformations des joints J, qui nuiraient à l'étanchéité de l'ensemble, les joints présentent avantageusement un fort rapport entre leurs hauteurs et largeurs. Chaque joint est avantageusement reçu dans une gorge formée dans le module d'embase 4, dans le plancher ou bien encore formée en partie dans le module d'embase 4 et en partie dans le plancher.

Afin d'assurer le montage représenté notamment sur les figures 4a à 4c, l'ensemble selon l'invention est en outre caractérisé en ce que chaque module d'embase 4 présente au moins deux vis de fixation 7, de préférence (exactement) deux vis de fixation 7, pour les fixer sur ledit plancher, lesdites vis de fixation 7 étant disposées à proximité des extrémités de chaque module d'embase 4.

Afin de pouvoir former le circuit souhaité pour le fluide caloporteur, il est nécessaire, comme indiqué schématiquement à la figure 2, de relier les différents modules d'embase 4 adjacents entre eux par l'intermédiaire de ponts 5 qui forment ainsi des boucles.

Conformément à la présente invention, l'ensemble modulable précité est caractérisé en ce que chaque pont 5 est réalisé sous la forme d'une entretoise longiligne 8 permettant de relier fluidiquement deux modules d'embase 4 adjacents et compotant au moins deux leviers pivotants 9 qui sont munis, à leurs extrémités inférieures, de crochets 10 venant en prise par le bas avec des ergots 11 correspondants disposés sur les modules d'embase 4 à relier et qui sont munis, à leur extrémités opposées, de points de fixation 12 venant en regard avec des points de fixation correspondants 13 situés sur les modules d'embase 4, lesdits points de fixations 12, 13 étant aptes à recevoir une vis permettant leur solidarisation mutuelle lorsque lesdits leviers pivotants (9) sont abaissés et en prise avec les ergots 11 des modules d'embase 4 à relier.

A cet effet, les leviers 9 sont munis d'orifices traversants permettant le passage des vis 14 assurant la liaison entre le pont 5 et le module d'embase 4.

Le boîtier 1 peut être par exemple réalisé en métal ou en un matériau rigide à faible conductivité thermique, tel que qu'une matière synthétique ou plastique. Il est constitué, d'une part, par un bac inférieur avec une paroi de fond et des parois latérales assemblés périphériquement, préférentiellement par vissage, et éventuellement avec interposition d'un joint d'étanchéité (cf. fig. 1).

Avantageusement, une réalisation du boîtier 1 en un matériau plastique rigide (matière thermoplastique chargée ou non en additifs et/ou en fibres, par exemple polypropylène, polyamide, polyester, etc.) et en deux parties assemblées périphériquement, permet d'aboutir simultanément (par rapport à des boîtiers métalliques) à une meilleure isolation thermique et à une réduction des coûts de revient, et autorise une grande variété et diversité de formes réalisables.

Avantageusement, l'ensemble selon l'invention est donc également caractérisé en ce que tous ses éléments constitutifs sont réalisés en une ou plusieurs matières plastiques et en ce que l'épaisseur dudit ensemble est inférieure à celle du plancher extrudé.

De préférence, ledit ensemble modulable est caractérisé en ce que son épaisseur est inférieure à 14 mm.

Selon une autre caractéristique, les modules (3, 3') sont reliés fluidiquement à des lignes de distribution/collecte faisant partie d'un circuit d'alimentation/évacuation de fluide caloporteur. Par ailleurs, un moyen conventionnel de contrôle de la température, de la circulation et/ou de la distribution du liquide caloporteur peut être intégré structurellement, voire matériellement, au moins en partie dans le boîtier 1, par exemple sous la forme d'une intégration partielle d'une pompe à eau (non représentée).

Enfin, la présente invention a encore pour objet un véhicule automobile, en particulier électrique ou hybride, caractérisé en ce qu'il comprend au moins un ensemble selon la présente invention.

De façon classique ledit véhicule automobile comprend donc au moins une unité de batterie telle que décrite ci-dessus, cette unité de batterie comportant en outre au moins un moyen de mesure de température interne, des moyens de raccordement électrique des cellules ou éléments entre elles et des moyens de branchement extérieur, ces derniers étant avantageusement partiellement formés avec ou dans une paroi du boîtier 1.

Bien entendu, l'invention n'est pas limitée aux modes de réalisation décrits et représentés aux dessins annexés. Des modifications restent possibles, notamment du point de vue de la constitution des divers éléments sans sortir pour autant du domaine de protection de l'invention défini par les revendications.

## Revendications

1. Boîtier (1) pour le logement d'au moins une unité de batterie, comprenant un ensemble modulable pour l'admission, la circulation et la sortie d'un fluide caloporteur, en particulier de refroidissement d'au moins une unité de batterie pour un véhicule automobile hybride ou électrique comportant au moins une telle unité, ledit boîtier (1) présentant un plancher dans lequel sont arrangés des canaux (2) rectilignes et parallèles entre eux recevant ledit fluide, et ledit boîtier (1) comportant :
- un module (3) servant d'entrée et un module (3') identique servant de sortie dudit fluide caloporteur vers, respectivement depuis, le circuit de canaux (2) via à chaque fois un module d'embase (4), chaque module d'embase (4) comprenant un système de canaux sensiblement rectilignes et parallèles et venant en regard des extrémités des canaux (2) dudit plancher, de sorte que les canaux du module d'embase (4) viennent à chaque fois en appui étanche sur lesdites extrémités, lesdits modules d'embase (4) étant fixés sur ledit plancher,
- une pluralité de modules d'embase (4) répartis le long de chacune des deux faces du plancher et venant en regard des extrémités des canaux (2) dudit plancher, de sorte que les canaux du module d'embase (4) viennent à chaque fois en appui étanche sur lesdites extrémités, lesdits modules d'embase (4) étant fixés sur ledit plancher, et
- une pluralité de ponts (5) reliant fluidiquement deux modules d'embase (4) adjacents situés sur un même côté dudit plancher entre eux et deux modules d'embase (4) situés sur le côté opposé du boitier (1) entre eux avec un décalage de sorte à former un circuit de fluide caloporteur en forme de U ou de serpentin entre les deux faces opposées dudit boîtier (1), le cas échéant tout le long de ce dernier,
- chaque module d'embase (4) étant réalisé sous la forme d'une barre longiligne (6) comportant au moins deux, de préférence trois et encore plus préférentiellement quatre canaux venant en prise étanche avec un nombre correspondant de canaux (2) situés dans le plancher dudit boîtier (1),
**caractérisé en ce que** chaque pont (5) est réalisé sous la forme d'une entretoise longiligne (8) permettant de relier fluidiquement deux modules d'embase (4) adjacents et compotant au moins deux leviers pivotants (9) qui sont munis, à leurs extrémités inférieures, de crochets (10) venant en prise par le bas avec des ergots (11) correspondants disposés sur les modules d'embase (4) à relier et qui sont munis, à leur extrémités opposées, de points de fixation (12) venant en regard avec des points de fixation correspondants (13) situés sur les modules d'embase (4), lesdits points de fixations étant aptes à recevoir une vis permettant leur solidarisation mutuelle lorsque lesdits leviers pivotants (9) sont abaissés et en prise avec les ergots (11) des modules d'embase (4) à relier.

2. Boîtier à ensemble modulable selon la revendication 1, **caractérisé en ce que** les modules (3, 3') servant d'entrée et de sortie sont réalisés sous la forme de conduits fixés de façon étanche par vissage, de préférence à l'aide de deux vis (V) pour chaque module (3, 3'), avec communication fluidique sur lesdits modules d'embase (4).

3. Boîtier à ensemble modulable selon la revendication 1 ou 2, **caractérisé en ce qu'**il comprend exactement un module (3) servant d'entrée et un module (3') identique servant de sortie et **en ce que** ces modules (3, 3') sont disposés sur le même côté du boîtier (1).

4. Boîtier à ensemble modulable selon l'une quelconque des revendications 1 à 3, **caractérisé en ce que** chaque module d'embase (4) présente au moins deux vis de fixation (7), de préférence deux vis, pour les fixer sur ledit plancher, lesdites vis de fixation (7) étant disposés à proximité des extrémités de chaque module d'embase (4).

5. Boîtier à ensemble modulable selon l'une quelconque des revendications 1 à 4, **caractérisé en ce que** tous ses éléments constitutifs sont réalisés en une ou plusieurs matières plastiques et **en ce que** l'épaisseur dudit ensemble est inférieure à celle du plancher.

6. Boîtier à ensemble modulable selon la revendication 5, **caractérisé en ce que** l'épaisseur est inférieure à 14 mm.

7. Boîtier à ensemble modulable selon l'une quelconque des revendications 1 à 6, **caractérisé en ce que** les modules (3, 3') sont reliés fluidiquement à des lignes de distribution/collecte faisant partie d'un circuit d'alimentation/évacuation de fluide caloporteur.

8. Véhicule automobile, en particulier électrique ou hybride, **caractérisé en ce qu'**il comprend au moins un boîtier (1) à ensemble modulable selon l'une quelconque des revendications 1 à 7.

## Patentansprüche

1. Gehäuse (1) zur Aufnahme wenigstens einer Batterieeinheit, welches eine modulare Anordnung für den Einlass, die Zirkulation und den Auslass eines Wärmeübertragungsfluids umfasst, insbesondere zur Kühlung wenigstens einer Batterieeinheit für ein hybrides oder elektrisches Kraftfahrzeug, das wenigstens eine solche Einheit aufweist, wobei das Gehäuse (1) einen Boden aufweist, in welchem gerade und zueinander parallele Kanäle (2) angeordnet sind, die das Fluid aufnehmen, und wobei das Gehäuse (1) aufweist:
- ein Modul (3) und ein identisches Modul (3'), die als Einlass bzw. Auslass für das Wärmeübertragungsfluid in den bzw. aus dem Kreislauf der Kanäle (2) über jeweils ein Sockelmodul (4) dienen, wobei jedes Sockelmodul (4) ein System von Kanälen umfasst, die im Wesentlichen gerade und parallel sind und den Enden der Kanäle (2) des Bodens gegenüberliegen, derart, dass die Kanäle des Sockelmoduls (4) jedes Mal auf diesen Enden dicht zur Anlage kommen, wobei die Sockelmodule (4) auf dem Boden befestigt sind,
- mehrere Sockelmodule (4), die entlang jeder der zwei Seiten des Bodens verteilt sind und den Enden der Kanäle (2) des Bodens gegenüberliegen, derart, dass die Kanäle des Sockelmoduls (4) jedes Mal auf diesen Enden dicht zur Anlage kommen, wobei die Sockelmodule (4) auf dem Boden befestigt sind, und
- mehrere Brücken (5), die zwei benachbarte Sockelmodule (4), die sich auf derselben Seite des Bodens befinden, miteinander und zwei Sockelmodule (4), die sich auf der gegenüberliegenden Seite des Gehäuses (1) befinden, mit einem Versatz miteinander in Fluidverbindung bringen, so dass ein U-förmiger oder schlangenförmiger Kreislauf von Wärmeübertragungsfluid zwischen den zwei gegenüberliegenden Seiten des Gehäuses (1) gebildet wird, gegebenenfalls entlang der gesamten Länge dieses Letzteren,
- wobei jedes Sockelmodul (4) in der Form eines länglichen Stabes (6) ausgebildet ist, der wenigstens zwei, vorzugsweise drei und, noch stärker bevorzugt, vier Kanäle aufweist, die eine entsprechende Anzahl von Kanälen (2), die sich im Boden des Gehäuses (1) befinden, abdichtend berühren,
**dadurch gekennzeichnet, dass** jede Brücke (5) in der Form eines länglichen Distanzstücks (8) ausgebildet ist, welches ermöglicht, zwei benachbarte Sockelmodule (4) in Fluidverbindung zu bringen, und wenigstens zwei Schwenkhebel (9) aufweist, welche an ihren unteren Enden mit Haken (10) ausgestattet sind, die von unten mit entsprechenden Ansätzen (11) in Eingriff gelangen, die auf den zu verbindenden Sockelmodulen (4) angeordnet sind, und welche an ihren entgegengesetzten Enden mit Befestigungspunkten (12) ausgestattet sind, welche entsprechenden Befestigungspunkten (13) gegenüberliegen, die sich auf den Sockelmodulen (4) befinden, wobei die Befestigungspunkte geeignet sind, eine Schraube aufzunehmen, die ihre feste Verbindung miteinander ermöglicht, wenn die Schwenkhebel (9) abgesenkt sind und sich mit den Ansätzen (11) der zu verbindenden Sockelmodule (4) in Eingriff befinden.

2. Gehäuse mit einer modularen Anordnung nach Anspruch 1, **dadurch gekennzeichnet, dass** die Module (3, 3'), die als Einlass und Auslass dienen, in der Form von Leitungen ausgebildet sind, die durch Verschrauben, vorzugsweise mithilfe von zwei Schrauben (V) für jedes Modul (3, 3'), mit Fluidverbindung dicht auf den Sockelmodulen (4) befestigt sind.

3. Gehäuse mit einer modularen Anordnung nach Anspruch 1 oder 2, **dadurch gekennzeichnet, dass** es genau ein als Einlass dienendes Modul (3) und ein als Auslass dienendes identisches Modul (3') umfasst, und dadurch, dass diese Module (3, 3') auf derselben Seite des Gehäuses (1) angeordnet sind.

4. Gehäuse mit einer modularen Anordnung nach einem der Ansprüche 1 bis 3, **dadurch gekennzeichnet, dass** jedes Sockelmodul (4) wenigstens zwei Befestigungsschrauben (7), vorzugsweise zwei Schrauben, aufweist, um es auf dem Boden zu befestigen, wobei die Befestigungsschrauben (7) in der Nähe der Enden des jeweiligen Sockelmoduls (4) angeordnet sind.

5. Gehäuse mit einer modularen Anordnung nach einem der Ansprüche 1 bis 4, **dadurch gekennzeichnet, dass** alle Bestandteile aus einem oder mehreren Kunststoffen ausgebildet sind, und dadurch, dass die Dicke der Anordnung kleiner als diejenige des Bodens ist.

6. Gehäuse mit einer modularen Anordnung nach Anspruch 5, **dadurch gekennzeichnet, dass** die Dicke kleiner als 14 mm ist.

7. Gehäuse mit einer modularen Anordnung nach einem der Ansprüche 1 bis 6, **dadurch gekennzeichnet, dass** die Module (3, 3') mit Verteilungs-/Sammelleitungen in Fluidverbindung stehen, die Teil eines Kreislaufs zur Zuführung/Ableitung von Wärmeübertragungsfluid sind.

8. Kraftfahrzeug, insbesondere elektrisches oder hybrides Kraftfahrzeug, **dadurch gekennzeichnet, dass** es wenigstens ein Gehäuse (1) mit einer modularen Anordnung nach einem der Ansprüche 1 bis 7 umfasst.

## Claims

1. Casing (1) for accommodating at least one battery unit, comprising a modular assembly for the inlet, circulation and outlet of a heat transfer fluid, in particular a cooling fluid, in at least one battery unit for a hybrid or electric motor vehicle having at least one such unit, said casing (1) having a floor in which mutually parallel and rectilinear channels (2) are arranged that receive said fluid, and said casing (1) having:
- a module (3) serving as inlet and an identical module (3') serving as outlet for said heat transfer fluid to and from, respectively, the circuit of channels (2) via in each case a base module (4), each base module (4) comprising a system of substantially rectilinear and parallel channels facing the ends of the channels (2) in said floor, such that the channels of the base module (4) in each case butt in a leaktight manner against said ends, said base modules (4) being fastened to said floor,
- a plurality of base modules (4) distributed along each of the two faces of the floor and facing the ends of the channels (2) in said floor, such that the channels of the base module (4) in each case butt in a leaktight manner against said ends, said base modules (4) being fastened to said floor, and
- a plurality of bridges (5) fluidically connecting two adjacent base modules (4) situated on one and the same side of said floor together and two base modules (4) situated on the opposite side of the casing (1) together with an offset so as to form a U-shaped or serpentine heat transfer fluid circuit between the two opposite faces of said casing (1), if necessary along the entire length of the latter,
- each base module (4) being made in the form of an elongate bar (6) having at least two, preferably three and even more preferably four channels in leaktight engagement with a corresponding number of channels (2) situated in the floor of said casing (1),
**characterized in that** each bridge (5) is made in the form of an elongate spacer (8) for fluidically connecting two adjacent base modules (4) and having at least two pivoting levers (9) which are provided, at their lower ends, with hooks (10) that engage at their bottoms with corresponding protrusions (11) disposed on the base modules (4) to be connected and which are provided, at their opposite ends, with fastening points (12) that face corresponding fastening points (13) situated on the base modules (4), said fastening points being able to take a screw for screwing them together when said pivoting levers (9) are lowered and engaged with the protrusions (11) of the base modules (4) to be connected.

2. Casing having a modular assembly according to Claim 1, **characterized in that** the modules (3, 3') serving as inlet and outlet are made in the form of ducts fastened in a leaktight manner by screwing, preferably with the aid of two screws (V) for each module (3, 3'), with fluidic communication to said base modules (4).

3. Casing having a modular assembly according to Claim 1 or 2, **characterized in that** it comprises exactly one module (3) serving as inlet and one identical module (3') serving as outlet, and **in that** these modules (3, 3') are disposed on the same side of the casing (1).

4. Casing having a modular assembly according to any one of Claims 1 to 3, **characterized in that** each base module (4) has at least two fastening screws (7), preferably two screws, for fastening them to said floor, said fastening screws (7) being disposed in the vicinity of the ends of each base module (4).

5. Casing having a modular assembly according to any one of Claims 1 to 4, **characterized in that** all of the constituent elements thereof are made from one or more plastics materials, and **in that** the thickness of said assembly is less than that of the floor.

6. Casing having a modular assembly according to Claim 5, **characterized in that** the thickness is less than 14 mm.

7. Casing having a modular assembly according to any one of Claims 1 to 6, **characterized in that** the modules (3, 3') are fluidically connected to distribution/collection lines that are part of a heat transfer fluid feed/discharge circuit.

8. Motor vehicle, in particular electric or hybrid motor vehicle, **characterized in that** it comprises at least one casing (1) having a modular assembly according to any one of claims 1 to 7.
